**Europäisches Patentamt**

**European Patent Office**

**Office européen des brevets**

(19)

(11) Veröffentlichungsnummer: **0 352 473**
**A2**

(12) ## EUROPÄISCHE PATENTANMELDUNG

(21) Anmeldenummer: **89111262.5**

(22) Anmeldetag: **21.06.89**

(51) Int. Cl.⁴: **C04B 35/52 , F27D 17/00**

(30) Priorität: **27.06.88 DE 3821596**

(43) Veröffentlichungstag der Anmeldung:
**31.01.90 Patentblatt 90/05**

(84) Benannte Vertragsstaaten:
**AT BE CH DE ES FR GB GR IT LI LU NL SE**

(71) Anmelder: **Feist, Horst J.**
**Am Mühlgraben 7**
**D-6969 Hardheim(DE)**

(72) Erfinder: **Feist, Horst J.**
**Am Mühlgraben 7**
**D-6969 Hardheim(DE)**

(74) Vertreter: **Hach, Hans Karl, Dr.**
**Tarunstrasse 23**
**D-6950 Mosbach-Waldstadt(DE)**

(54) **Verfahren und Vorrichtung zum Herstellen von Elektroden aus Kohlenstoff.**

(57) Zu Herstellung von Elektroden. aus Kohlenstoff werden diese beim Zweitbrand einzeln aufgereiht durch ein gerades Brennrohr 1 geschoben und dabei von Heißgas aus einem Heißgaskreislauf umspült. Das Heißgas durchläuft in dem Kreislauf die Verbrennungskammer 27 eines Brenners und wird dort aufgeheizt. Gleichzeitig wird in der Verbrennungskammer die Beladung des Heißgases an vergastem Pech und Koks verbrannt.

FIG. 3

# VERFAHREN UND VORRICHTUNG ZUM HERSTELLEN VON ELEKTRODEN AUS KOHLENSTOFF

Die Erfindung betrifft ein Verfahren zum Herstellen von Elektroden aus Kohlenstoff, bei dem aus Pech und Kokspulver vorgeformte, grüne Elektrodenrohlinge in einem Erstbrand vorgefestigt, dann mit Pech imprägniert einem Zweitbrand unterworfen werden, wobei die Elektrodenrohlinge beim Brand in einer nach außen abgeschlossenen und thermisch isolierten Brandstelle von Heißgas umspült werden, das dabei eine Beladung von vergastem Pech und mitgerissenem Koks aufnimmt und abkühlt, und eine Vorrichtung zur Ausübung dieses Verfahrens.

Bei einem bekannten Verfahren dieser Art werden die beladenen, abgekühlten Heißgase, die beispielsweise noch eine Temperatur von 500°C haben, nach außen abgeblasen und an anderer Stelle verbrannt.

Aufgabe der Erfindung ist es, den Energiegehalt der Heißgase in Form von Wärme und verbrennbaren Substanzen in diesem Verfahren auszunutzen.

Die Erfindung ist dadurch gekennzeichnet, daß das beladene, abgekühlte Heißgas an einer Verbrennungsstelle wieder aufgeheizt wird, indem von außen Heizenergie und Frischluft zugeführt und die Beladung verbrannt wird, und daß das wieder aufgeheizte, von der Beladung befreite Heißgas erneut der Brandstelle zugeführt wird. Die gewonnenen Elektroden werden vorzugsweise anschließend elektrisch graphitiert.

Die Verbrennung der Beladung kann als Flammverbrennung, sie kann aber auch in Form einer sogenannten Raumverbrennung erfolgen. Dazu werden die Bedingungen für die Raumverbren nung aufrechterhalten, nämlich eine Temperatur von mindestens 700°C, starke Durchmischung der beteiligten Gase, die Anwesenheit von Sauerstoff und eine Verweildauer von 1 bis 30 Sekunden, abhängig vom Sauerstoffgehalt.

Für die Erfindung wird nicht nur die Abwärme genutzt, weil die Heißgase im Kreislauf strömen, sondern es wird auch die Beladung der Heißgase aus vergasten Pech und mitgerissenen Koksteilen verbrannt und dadurch für die Beheizung genutzt. Einerseits wird dadurch Energie gespart, andererseits wird dadurch die Abluft gereinigt. Bei den mitgerissenen Koksteilen handelt es sich in erster Linie um Pechkoks. Als Energiequelle für die Wiederaufheizung genügt ein einziger Brenner für die gesamte Anlage zur Betreibung des Verfahrens, der mit Leichtöl, Schwer- oder Mittelöl, Brenngas oder anderen Brennstoffen betrieben werden kann. Mit dem gleichen Brenner kann auch die Beladung der Heißgase verbrannt werden.

Sauerstoff in den Heißgasen, die die Elektrodenrohlinge umspülen, ist schädlich, weil dadurch die äußere Schicht der Elektrodenrohlinge verbrannt wird. Deshalb werden bei bekannten Verfahren die Elektrodenrohlinge beim Brand in Behältern untergebracht, um sie vor dem unmittelbaren Kontakt mit den sauerstoffhaltigen Heißgasen zu schützen.

Solche Behälter werden überflüssig, wenn die Heißgase beim Brand keinen oder nur sehr wenig Sauerstoff enthalten. Aus diesem Grunde empfiehlt es sich, daß der Sauerstoffgehalt, des wieder aufgeheizten, von der Beladung befreiten Heißgases vor dem Eintreten in die Brandstelle gemessen wird, daß dieser Sauerstoffgehalt in Abhängigkeit von den Meßwerten reduziert wird durch Drosseln der Frischluftzufuhr und/oder durch Zufuhr von Kohlenwasserstoff, vorzugsweise in Form von Teergasen, an einer vor der Brandstelle gelegenen Raumver brennungsstelle und daß dort eine Raumverbrennung unter Beteiligung des restlichen Sauerstoffs hervorgerufen wird, durch Aufrechterhalten einer Temperatur von mindestens 700 ° C (Grad Celsius) und intensives Durchmischen der beteiligten Gase.

Dadurch ist es möglich, den Sauerstoffgehalt des Heißgases auf 0,5 % und weniger zu reduzieren und Verluste von Elektrodenrohlingmaterial durch Verbrennen nahezu vollständig zu vermeiden.

Bei der Zufuhr von Kohlenwasserstoff kann es sich um die Beladung der beladenen, abgekühlten Heißgase handeln, es können aber auch Kohlenwasserstoffe, zum Beispiel Methan, von außen zugeführt werden.

Sauerstoffarmes Heißgas gestattet es, die Elektrodenrohlinge ungeschützt in der Brandstelle dem Heißgas auszusetzen. Man spart sich auf diese Weise die bei bekannten Verfahren vorgesehenen Behälter für die Elektroden, die dazu dienen, den unmittelbaren Kontakt der Elektroden mit dem sauerstoffhaltigen Heißgas zuvermeiden. Solche Behälter oder Wagen, wie sie bei bekannten Verfahren vorgesehen sind, müssen mit aufgeheizt werden, lenken die Heißgasströmung um und beeinträchtigen so eine wünschenswerte gleichmäßige Durchheizung der Elektrodenrohlinge.

Will man die Elektrodenrohlinge vor dem unmittelbaren Kontakt mit dem Heißgas schützen, dann empfiehlt es sich, die Elektrodenrohlinge statt in einem stabilen Behälter in einer flexiblen Schutzfolie, vorzugsweise eine Metallfolie, einzuhüllen. Dann kann ein eventueller Sauerstoffanteil des Heißgases nicht die Elektrodenrohling-Oberfläche verbrennen. Eine solche Schutzfolie hat dann mindestens eine Durchlaßöffnung zum Austritt der aus dem betreffenden Elektrodenroh ling austretenden Gase, die dann von dem umströmenden Heißgas mitgerissen werden.

Das erfinderische Verfahren ist chargenweise anwendbar, vorzugsweise wird es aber kontinuierlich betrieben. Zum kontinuierlichen Betrieb empfiehlt es sich, daß die Elektrodenrohlinge für den Brand aufgereiht durch eine gerades Brennrohr, das die Brennstelle und die in der Brennstelle befindlichen Elektrodenrohlinge umgibt, bewegt werden, und daß ein jeweils letzter Elektrodenrohling durch Eingriff von außen vorgeschoben wird und andere Elektrodenrohlinge vor sich herschiebt, indem diese sich aufeinander abstützen.

Dabei kann es sich um eine einzige Reihe koaxial aufgereihter Elektrodenrohlinge handeln, es können aber auch mehrere solche Elektrodenreihen nebeneinander durch das Brennrohr geschoben werden. Es ist auch möglich, die Elektroden mit ihren Achsen quer zur Vorschubrichtung durch das Brennrohr zu rollen und schließlich ist es möglich, die Elektroden einzeln oder zu jeweils mehreren auf Wagen abzustapeln und durch das Brennrohr zu schieben oder zu ziehen.

Beim Durchlauf durch das Brennrohr wird jeder einzelne Elektrodenrohling zunächst aufgeheizt und dann wieder abgekühlt, wobei zum Abkühlen eine entsprechend lange Brennrohrstrecke vorgesehen sein kann, die nicht von Heißgas durchströmt wird und auch nicht thermisch isoliert sein muß. Die Kühlung der Elektroden kann auch direkt erfolgen durch Einblasen von versprühtem Wasser oder indirekt durch Kühlen des Brennrohrs von außen mit Kühlwasser oder dergleichen.

Entsprechend empfiehlt es sich, die Elektroden vor dem Einführen in das Brennrohr vorzuwärmen. Das kann mit Hilfe der abgekühlten Heißgase erfolgen.

Zur Herstellung kreiszylinderförmiger Elektroden empfiehlt es sich, daß das Brennrohr ein kreisrundes Rohr ist, in das die Elektrodenrohlinge koaxial zur Brennrohrachse aneinandergereiht mit Zwischenraum passen.

Ein solches Brennrohr läßt sich besonders einfach herstellen und betreiben. Dabei empfiehlt es sich, daß ein Zwischenraum gebildet wird, indem die Querschnittsfläche des Kanals des Brennrohrs um 30 bis 150%, vorzugsweise um 40 bis 80%, größer ist als die in der gleichen Querschnittsebene gemessene Querschnittsfläche eines im Brennrohr befindlichen Elektrodenrohlings ausmacht.

Die so gewählte Querschnittsfläche des Zwischenraums reicht aus, um eine hinreichende Menge an Heißgas durchzuströmen und die Elektroden zu umströmen.

Das Brennrohr steht vorzugsweise bei Betrieb mit horizontaler Achse oder leicht zur Horizontalen geneigt. Die Elektrodenrohlinge werden dann vom Aufgabeende eingeschoben. Jeder neu hinzugefügte Elektrodenrohling schiebt die gesamte Reihe der bereits im Brennrohr vorhandenen Elektrodenrohlinge vor sich her. Die Bewegung kann man natürlich unterstützen, indem man das Brennrohr in Vorschubrichtung leicht abschüssig neigt.

Das Brennrohr kann auch steiler oder sogar vertikal stehen. Dann stehen die Elektrodenrohlinge aufeinander und können bewegt werden, indem man jeweils die unterste Elektrode wegnimmt oder von unten einzelne Elektrodenrohlinge nachschiebt.

Die Erfindung ist vorzugsweise anwendbar zur Durchführung des Zweitbrandes an Elektrodenrohlingen, die aufgrund des Erstbrandes bereits formstabil sind. Mit der Erfindung läßt sich aber auch der Erstbrand an Elektrodenrohlingen durchführen, die man dann aber zweckmäßig in eine passende, stabile Wanne legt, um sie zu stützen. Diese Wanne ist dabei vorzugsweise mit Koks ausgepolstert. In einem solchen Fall kann sich der Vorschub einer Elektrodenreihe auf den Wannen abstützen.

In einer solchen Wanne kann man auch eine Vielzahl kleinerer Rohlinge stapeln und einem Erst- oder Zweitbrand unterziehen.

Für die Durchführung des Brandes ist es wichtig, daß die einzelnen Elektroden einem vorgegebenen zeitlich bestimmten Temperaturverlauf unterworfen werden. Das wird dadurch ermöglicht, daß die Heißgase an mehreren Stellen auf die Länge des Brennrohrs verteilt, dosiert in das Brennrohr eingeströmt werden und daß an mehreren Stellen auf die Länge des Brennrohrs verteilt überschüssiges Heißgas zum Druckausgleich aus dem Brennrohr abströmt und mit dem übrigen Heißgas, das das Brennrohr durchströmt hat, an die Verbrennungsstelle geleitet wird.

Durch die Heißgaszufuhr an diskreten Stellen des Brennrohrs kann dort in Abhängigkeit von gemessenen Temperaturen die Prozeßtemperatur auf die gewünschten Werte gesteuert werden.

Die Elektrodenrohlinge werden in das Brennrohr zweckmäßig über Gasschleusen eingegeben und abgenommen, um dabei unnötigen Heißgasverlust zu vermeiden. Besonders einfach wird Heißgasverlust am förderabwärtigen Ende des Brennrohrs vermieden, indem der freie Zwischenraum zwischen der Brennrohwandung und einem Elektrodenrohling ständig mit hitzebeständigem, rieselfähigem Schüttgut einer Korngröße von 1 bis 10 mm aufgefüllt gehalten wird, wobei Verluste, die durch auslaufendes Schüttgut am offenen Ende des Kanals entstehen, durch Nachfüllen von Schüttgut ständig ausgeglichen werden.

Diese Art der Abdichtung ist besonders vorteilhaft anwendbar bei kreisrundem Brennrohr und kreiszylinderförmigen Elektrodenrohlingen.

Die Elektrodenrohlinge schleifen beim Vorschub, wenn sie nicht in besonderen Wannen liegen oder durch Folien geschützt sind, auf der Innenwand des Brennrohrs. Dabei können entlang der Schleif- oder Rollstrecken Pech- und Koksstaubreste verkrusten, die dann den weiteren Vorschub der Elektrodenrohlinge behindern. Dem kann man leicht dadurch entgegenwirken, daß die Elektroden während ihres Aufenthaltes im Brennrohr gerüttelt, um die Vorschubrichtung hin- und hergewälzt und/oder während des Vorschubs um die Vorschubrichtung gedreht werden. Das Rütteln und Hin- und Herwälzen kann durch am Brennrohr auf die Länge verteilt angeordnete Rüttel- oder Wälzeinrichtungen geschehen, die von außen direkt auf die Elektrodenrohlinge einwirken. Entsprechend kann auch die Drehung hervorgerufen werden.

Die Drehung um die Vorschubrichtung ist aber sehr viel einfacher hervorzurufen durch wendelförmige Züge in Form von Rippen oder Rillen an der Innenwand des Brennrohrs.

Das erfinderische Verfahren wird vorzugsweise bei Normaldruck betrieben in der Weise, daß im Innern des Brennrohrs ein leichter Unter- oder Überdruck gegenüber dem Außendruck herrscht in der Größenordnung von -50 bis +50 mm Wassersäule. Es ist aber auch möglich, das Verfahren mit Überdruck zu betreiben, um eine Druckverkokung zu erzielen, weil die Verkokungsrate bei steigendem Druck zunimmt. Für solche Fälle kommen Überdrücke von bis zu 60bar in betracht, die dann innerhalb des Brennrohrs aufrechterhalten werden.

Die Erfindung wird nun anhand eines Verfahrensbeispiels und der beigefügten Zeichnung näher erläutert.

VERFAHRENSBEISPIEL

Aus Pech und Kokspulver wird eine breiige Masse gebildet, die zu kreiszylinderförmigen grünen Elektrodenrohlingen mit einem Durchmeser von 60 cm (28 bis 90 cm) und einer Länge von 240 cm (165 bis 320 cm) ausgeformt wird. Diese Elektrodenrohlinge werden einem Erstbrand unterzogen. Dazu werden die Elektrodenrohlinge über eine Zeit von 300 Stunden (80 bis 350 Stunden) ansteigend auf 850°C (750 bis 900°C) erhitzt und für 30 Stunden (10 bis 35 Stunden) auf dieser Temperatur von 850°C (750 bis 900°C) gehalten und anschließend über 8 Stunden (8 bis 10 Stunden) auf 350°C abgekühlt. Die Elektrodenrohlinge können dann im Freien auf 20°C abgekühlt werden. Die Elektrodenrohlinge sind dadurch verfestigt und die so behandelten Elektrodenrohlinge sind formstabil und porös.

Diese Elektrodenrohlinge werden mit Pech imprägniert. Dazu werden sie auf 300°C (250 bis 350°C) aufgeheizt und in einem geschlossenen Behälter evakuiert. Dann wird 250°C (220 bis 280°C

aber mindestens 30°C unter der Elektrodentemperatur) warmes Pech in den Behälter eingelassen und dann der Behälterinhalt über 2 Stunden (1 bis 3 Stunden) unter 15 bar (8 bis 25 bar) Druck gehalten. Anschließend werden diese nun imprägnierten Elektrodenrohlinge aus dem Pech herausgezogen, abgetropft und abgekühlt.

Die so imprägnierten Elektrodenrohlinge werden dann einem zunächst während 50 Stunden (30 bis 80 Stunden) gleichmäßig auf 740°C (740 bis 800°C) erhitzt, dann über 14 Stunden auf dieser Temperatur gehalten und anschließend über 8 Stunden (8 bis 10 Stunden) gleichmäßig auf 350°C abgekühlt. Die Elektrodenrohlinge können nun im Freien auf 20°C abgekühlt werden. Sie können aber auch in noch warmem Zustand der Gra fitierung zugeführt werden.

Die Zahlenangaben in Klammern () sind bevorzugte Spannen, innerhalb derer die jeweils vorangestellten Zahlen, nach denen das Beispiel tatsächlich ausgeführt ist, variierbar sind.

In der Zeichnung zeigt:

Figur 1 eine Vorrichtung zur Herstellung von Graphitelektroden horizontal geschnitten und von oben gesehen, und zwar unter A den linken Teil und unter B den rechten Teil,

Figur 2 den Schnitt II aus Figur 1, und zwar unter A den linken Teil und unter B den rechten Teil,

Figur 3 den Schnitt III aus Figur 1,

Figur 4 den Querschnitt IV durch das Brennrohr aus Figur 1,

Figur 5 die Ausgangsschleuse aus Figur 2 geschnitten,

Figur 6 einen abgebrochenen Abschnitt eines abgeänderten rechteckigen Brennrohrs im Schnitt und

Figur 7 einen Abschnitt eines kreisrunden Brennrohrs, beschickt mit in Wannen liegenden grünen Elektrodenrohlingen.

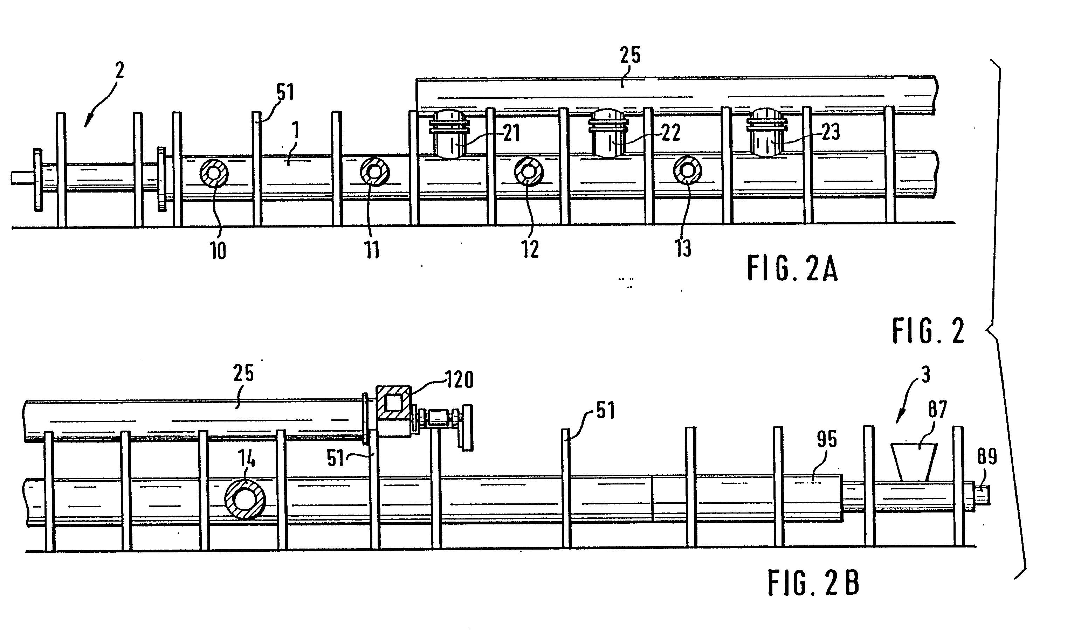

In der Zeichnung ist mit 1 ein gerades, horizontal angeordnetes, stabiles Brennrohr bezeichnet, dessen Wandung thermisch isolierend ausgebildet ist. Die Wandung des Brennrohrs besteht aus einer Stahlwand 90, auf die über einen ersten Abschnitt 92 außen ein thermischer Isolierbelag 91, 93 gelegt ist. Statt dessen kann auch eine Innenisolierung, zum Beispiel aus Schamottegestein, vorgesehen sein. An den ersten Abschnitt 92 schließt sich ein zweiter Abschnitt 94, der keine thermische Isolierung aufweist und statt dessen mit einem von Kühlwasser oder einem anderen Kühlmittel durchflossenen äußeren Mantel 95 umgeben ist. Stützen 51 für das Brennrohr sind nur in Figur 2 angedeutet.

Eingangsseitig ist eine Eintragsschleuse 2 und ausgangsseitig eine Ausgangsschleuse 3 an das Brennrohr 1 angeschlossen. Durch diese Schleusen 2 und 3 können einzeln kreiszylinderförmige Elektrodenrohling 4 beziehungsweise 5 ohne großen Gasverlust in das Innere des Brennrohrs 1 eingeschoben und aus diesem wieder herausgenommen werden. Weitere Elektrodenrohlinge 6, 7 ... sind koaxial zu den Elektrodenrohlingen 4 und 5 und zum Brennrohr einzeln hintereinander im Inneren des Brennrohrs 1 aufgereiht. Die eingesetzten Elektrodenrohlinge sind durch einen Erstbrand bereits formstabil und mit Pech imprägniert und werden im Brennrohr dem Zweitbrand unterworfen.

Die Eintragsschleuse 2 weist zwei quer zur Brennrohrachse 96 verschiebliche Tore 84, 85 und einen in Richtung der Achse 96 verschieblichen Stempel 86. Zunächst wird bei geöffnetem Tor 84 durch den Stempel ein Elektrodenrohling 4 in die Schleuse eingeschoben. Dann wird das Tor 84 geschlossen, das Tor 85 geöffnet und der Stempel 86 schiebt den Elektrodenrohling 4 an die Stelle, in der der Elektrodenrohling 6 gezeichnet ist, und schiebt dabei alle anderen Elektrodenrohlinge vor sich her. Dann fährt der Stempel 86 zurück und das Tor 85 wird wieder geschlossen.

Die Elektrodenrohlinge liegen mit ihrer Unterseite unten auf der Stahlwand 90 des Brennrohrs 1. Der Kanal 8 des Brennrohrs, der kreisrunden Querschnitt hat, hat eine kreisrunde Querschnittsfläche, die 40% größer ist als die in der gleichen Querschnittsebene gemessene Querschnittsfläche eines jeden im Brennrohr befindlichen Elektrodenrohlings 4 bis 7 ... . Es bleibt auf diese Weise zwischen der Stahlwand 90 des Brennrohrs 1 und der Außenfläche der Elektrodenrohlinge ein sichelförmiger Zwischenraum 9 frei.

Die Austragsschleuse 3 weist einen Schacht 87 auf, der in dem Zwischenraum 9 mündet. Durch den Schacht wird Sand 88 in den Zwischenraum gefüllt und dadurch eine Labyrinthdichtung erzielt. Der Sand läuft zum Teil, wenn der letzte Elektrodenrohling 89 beim Einschieben des Elektrodenrohlings 4 aus dem Brennrohr herausgeschoben wird, ebenfalls aus dem Brennrohr heraus, aber der dadurch entstehende Sandverlust wird durch ständig neu zufließenden Sand ersetzt.

In den Kanal 8 beziehungsweise in den Zwischenraum 9 münden auf den ersten Abschnitt der Länge des Brennrohrs verteilt angeordnete Heißgasstutzen 10 bis 14, die jeweils mit einem einstellbaren Drosselventil 15, 16, 17, 18, 19 ausgestattet sind. Mit 20 ist eine parallel zum Brennrohr 1 verlegte Heißgasleitung bezeichnet, von der die Stutzen 10 bis 13 ausgehen. In die Heißgasleitung 20 sind Schikanen 81, 82, 83, die die Heißgasströmung behindern, eingebaut. Die Schikane 81 befindet sich in Strömungsrichtung gemäß Pfeil 97 vor dem Heißgasstutzen 13, die Schikane 82 zwischen den Heißgasstutzen 12 und 13 und die Schikane 83 zwischen den Heißgasstutzen 11 und 12.

Von dem Zwischenraum 9 beziehungsweise dem Kanal 8 gehen auf die Länge des Brennrohrs verteilt Abzugsstutzen 21, 22, 23, 24 aus, die in eine parallel zum Brennrohr verlegte Rezirkulationsleitung 25 münden. Die Abzugsstutzen 21, 22, 23 sind den Heißgasstutzen 12, 13 und 14 einzeln zugeordnet und jeweils dem zugeordneten Stutzen gegenüber etwas in Strömungsrichtung gemäß Pfeil 26 versetzt angeordnet. Die Rezirkulationsleitung 25 mündet über ein Gebläse 29 und eine Rezirkulationsquerleitung 120 in die Verbrennungskammer 27 eines Ölbrenners 28. Statt des Ölbrenners 28 kann auch ein mit anderem Brennstoff betriebener Brenner vorgesehen sein. Der Heißgasstutzen 14 und die Heißgasleitung 20 sind an die Verbrennungskammer 27 mit je einem eingangsseitigen verstellbaren Drosselventil 19 beziehungsweise 30 angeschlossen. An das Ende 34 der Heißgasleitung 20 ist ein Abgasstutzen 35 angeschlossen, der über ein verstellbares Drosselventil 36 ein Abgasgebläse 37 und ein weiteres, verstellbares Drosselventil zu einem Abgaskamin 39 führt. In die Verbrennungskammer 27 mündet ein mit einem Gebläse 31 ausgestatteter Frischluftzufuhrstutzen 32, der außerdem mit einem einstellbaren Drosselventil 33 ausgestattet ist.

In die Verbrennungskammer 27 mündet ein mit einem einstellbaren Drosselventil 99 ausgestatteter Zufuhrstutzen. 98 für gasförmigen Kohlenwasserstoff. Dieser Stutzen wird an eine äußere, druckbelastete Kohlenwasserstoffgasquelle, zum Beispiel Methangasquelle oder Teergasquelle, angeschlossen und gestattet es, gasförmigen Kohlenwasserstoff in die Verbrennungskammer einzublasen.

Für die Heißgase besteht ein Kreislauf, der, abgesehen von dem Frischluftzufuhrstutzen 32, dem Zufuhrstutzen 98 und dem Abgaskamin 39 gasdicht geschlossen ist. An diesem gasdichten Verschluß sind die beiden Schleusen 2 und 3 beteiligt.

Die ganze Anlage ist mit diversen Meßgeräten ausgestattet, und zwar den Meßgeräten 101 und 102 zur Messung des Sauerstoffgehaltes des Heißgases am Heißgasstutzen 14 und der Heißgasleitung 20, sowie mit Temperaturmeßgeräten 103 bis 112 zur Messung der Temperatur des Heißgases an verschiedenen Stellen des Heißgaskreislaufes.

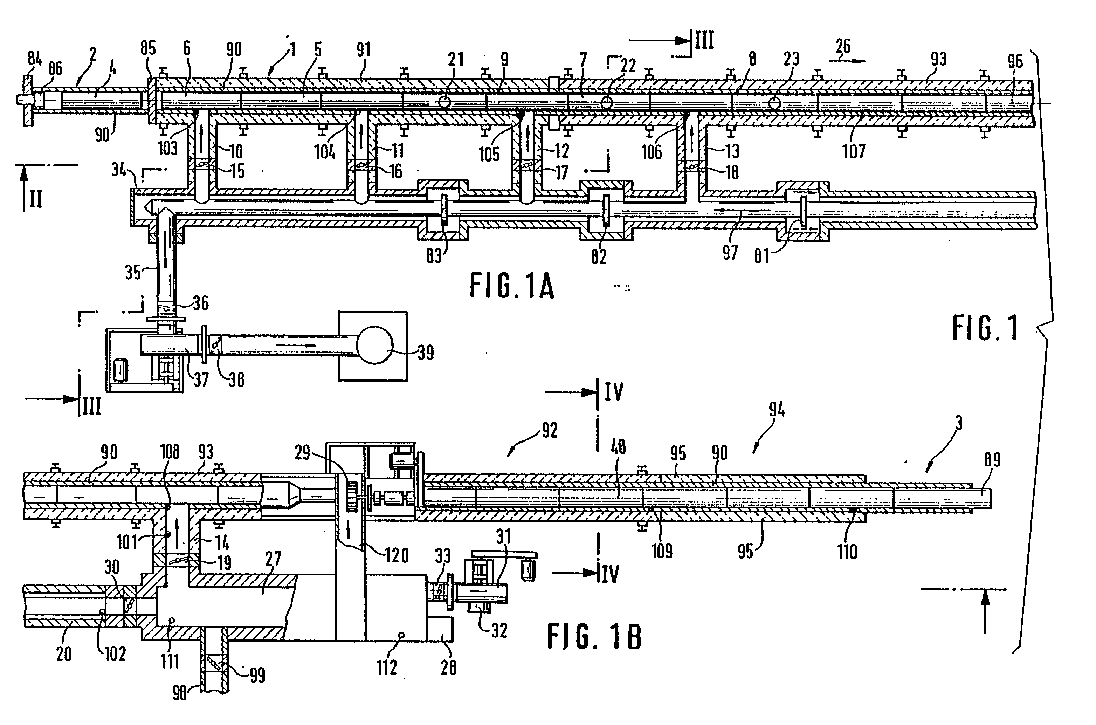

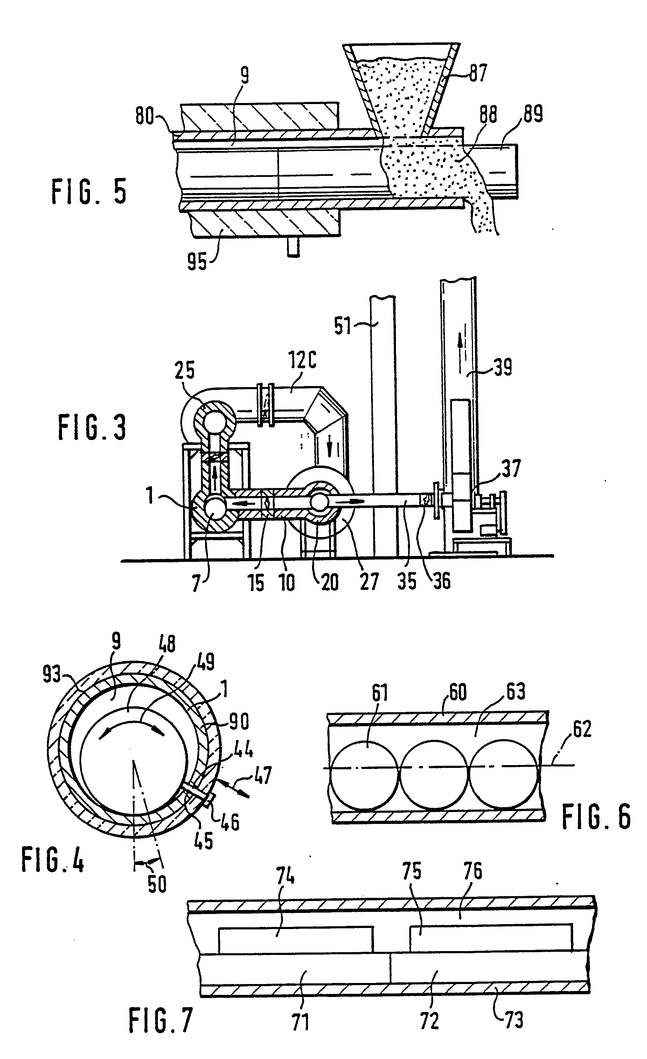

Auf die Länge des Brennrohrs 1 verteilt sind in Figur 1 und 2 nicht dargestellte Rüttelelemente vorgesehen, von denen eines in Figur 4 dargestellt und mit 44 bezeichnet ist. Die übrigen Rüttelelemente sind entsprechend ausgebildet. Dieses Rüttelelement ist in einer gasdichten Durchführung 45 durch die Wand des Brennrohrs 1 hindurchgeführt und kann mittels eines von außen zugänglichen Betätigungsorgans in Doppel pfeilrichtung 47 hin- und hergeschoben werden. Dadurch kann der anliegende Elektrodenrohling 48 in Doppelpfeilrichtung 49 um einen kleinen Umfangswinkelbetrag hin- und hergewälzt werden, wodurch verkrustete Ablagerungen in dem durch den Doppelpfeil 50 angezeigten Auflagebereich zermahlen und damit aufgelöst werden, so daß sie den weiteren Vorschub des Elektrodenrohlings nicht mehr behindern können.

Die Vorrichtung wird zur Durchführung des Zweitbrandes wie folgt betrieben:

Gleichgroße, durch den Erstbrand vorgefestigte, kreiszylindrische Elektrodenrohlinge werden einzeln nacheinander über die Schleuse 2 in das Innere des Brennrohrs 1 gesteckt und durch den Stempel 86, der auf den jeweils letzten Elektrodenrohling 4 einwirkt, durch das Brennrohr hindurchgeschoben, wobei sich die einzelnen Elektrodenrohlinge mit ihren Stirnflächen aufeinander abstützen.

Der jeweils vorderste Elektrodenrohling 89 gelangt durch die Schleuse 3 auf eine nicht dargestellte Ablage.

Während die Elektrodenrohlinge so das Brennrohr 1 in Pfeilrichtung 26 durchwandern, wird der Heißgaskreislauf betrieben. Heißgas wird in der Verbrennungskammer 27 aufgeheizt und strömt dann mit einer Temperatur von etwa 800 -850°C über die Heißgasstutzen 10, 11, 12, 13 und 14 dosiert in den Kanal 8 und von dort in Pfeilrichtung 26 den Kanal 8 entlang und über Abzugsstutzen 21, 22, 23, 24 sowie die Rezirkulationsleitung 25, angetrieben durch das Gebläse 29 mit einer Temperatur von etwa 500°C in die Verbrennungskammer 27. In der Verbrennungskammer 27 werden die Heißgase durch den brennenden Ölbrenner 28 wieder aufgeheizt. Dabei wird gleichzeitig die Beladung der Heißgase aus unverbrannten Pechgasen und mitgerissenem Kokspulver verbrannt. Auf diese Weise wird die Energie dieser Beladung genutzt und die un verbrannte Beladung von dem weiteren Kreislauf und auch vom Abgaskamin 39 ferngehalten. Dem Ölbrenner 28 wird von außen die dem jeweiligen Energiebedarf entsprechende Menge Brennstoff zugeführt.

In Abhängigkeit vom Sauerstoffgehalt, der an den als Sauerstoff-Fühlern ausgestatteten Meßgeräten 101 und 102 gemessen wird, wird die Zugabe der Frischluft über den Frischluftstutzen 31 und die Zugabe von Kohlenwasserstoff über den Zufuhrstutzen 98 gesteuert, so daß der Sauerstoffgehalt des in das Brennrohr 1 gelangenden Heißgases möglichst unter 0,5 % liegt. Die Leistung des Ölbrenners 28 wird in Abhängigkeit vom laufenden Energiebedarf nach Maßgabe der an den als Temperaturfühler ausgebildeten Temperaturmeßgeräten 103 bis 112 gemessenen Werte gesteuert. Im Verbrennungsraum 27 ist die Temperatur immer über 700°C, so daß dort Voraussetzungen für eine Raumverbrennung herrschen. Die Temperatur entlang des Brennrohrs ist unterschiedlich, und zwar nimmt sie in Durchführungsrichtung gemäß Pfeil 26 zu und dann wieder ab, um schließlich im zweiten Abschnitt 94, bedingt durch das eingesetzte Kühlwasser, stark abzunehmen. Die Flammverbrennung durch den Ölbrenner wird vorzugsweise betrieben mit stöchiometrischem Sauerstoffüberschuß. Die anschließende Verbrennung des überschüssigen Sauerstoffs wird vorzugsweise betrieben bei stöchiometrischem Kohlenwasserstoffüberschuß.

Der Temperaturverlauf im Brennrohr 1 wird gesteuert mit Hilfe der Drosselventile 15 bis 19 und durch die Intensität des Kühlwasserstroms durch den Mantel 95. Der Temperaturverlauf wirkt zeitlich auf die einzelnen Elektrodenrohlinge ein und diese Zeitabhängigkeit wird gesteuert durch den Vorschubtakt, mit dem die Elektrodenrohlinge mit Hilfe des Stempels 86 durch das Brennrohr geschoben werden.

Mit Hilfe der Drosselventile 33, 36 und 99 wird immer ein leichter Überdruck von 0 bis 50 mm Wassersäule im Inneren des Brennrohrs aufrechterhalten. Auf diese Weise ist sichergestellt, daß keine unerwünschte Frischluft von außen durch die Schleusen oder andere Undichtigkeiten in den Heißgasstrom gelangt.

In Abänderung des dargestellten Ausführungsbeispiels kann auch ein Brennrohr 60 mit rechteckigem Querschnitt vorgesehen sein, wie in Figur 6 dargestellt. In einem solchen Rechteckrohr können kreiszylindrische Elektrodenrohlinge 61 achsparallel nebeneinander angeordnet sein, und zwar mit einer Achsrichtung senkrecht zur Achse 62 des Brennrohrs. Diese Elektrodenrohlinge können durch das Brennrohr 60 gerollt werden, wobei sie sich gegenseitig an ihrem Umfang abstützen. Dabei wird der Zwischenraum 63 ausgespart.

Die Erfindung ist auch anwendbar zur Durchführung des Erstbrandes bei grünen Elektrodenrohlingen; allerdings werden dann für die grünen Elektrodenrohlingen, die in sich nicht formstabil genug sind, wannenförmige Gefäße 71, 72 eingesetzt wie in Figur 7 dargestellt. In Figur 7 ist mit 73 der Abschnitt eines kreisrunden Brennrohrs bezeichnet. In die beiden Gefäße 71, 72 passen die Elektrodenrohlinge 74, 75 etwa zur Hälfte formschlüssig. Die Gefäße überragen stirnseitig die Elektrodenrohlinge und stoßen im Verband aneinander, so daß sie infolge ihrer Formstabilität die beim Durchschieben der Gefäßereihe ausgeübten axialen Kräfte aufnehmen. Der Zwischenraum 76 wird dabei unter Einbeziehung des Querschnittes der Wannen ausgespart.

**Ansprüche**

1. Verfahren zum Herstellen von Elektroden aus Kohlenstoff, bei dem aus Pech und Kokspulver vorgeformte, grüne Elektrodenrohlinge ( 4, 5 ) in einem Erstbrand vorgefestigt, dann mit Pech imprägniert einem Zweitbrand unterworfen werden, wobei die Elektrodenrohlinge beim Brand in einer nach außen abgeschlossenen und thermisch isolierten Brandstelle 1 ) von Heißgas umspült werden, das dabei eine Beladung von vergastem Pech und mitgerissenem Koks aufnimmt und abkühlt, dadurch gekennzeichnet, daß das beladene, abgekühlte Heißgas an einer Verbrennungsstelle ( 27 ) wieder aufgeheizt wird, indem von außen Heizenergie und Frischluft zugeführt und die Beladung verbrannt wird, und daß das wieder aufgeheizte, von der Beladung befreite Heißgas erneut der Brandstelle zugeführt wird.

2. Verfahren nach Anspruch 1, dadurch gekennzeichnet, daß der Sauerstoffgehalt, des wieder aufgeheizten, von der Beladung befreiten Heißgases vor dem Eintreten in die Brand-stelle ( 1 ) gemessen wird, daß dieser Sauerstoffgehalt in Abhängigkeit von den Meßwerten (101, 102) reduziert wird durch Drosseln ( 33 ) der Frischluftzufuhr und/oder durch Zufuhr von Kohlenwasserstoff ( 98 ), vorzugsweise in Form von Teergasen, an einer vor der Brandstelle gelegenen Raumverbrennungsstelle ( 27 ) und daß dort eine Raumverbrennung unter Beteiligung des restlichen Sauerstoffs hervorgerufen wird, durch Aufrechterhalten einer Temperatur von mindestens 700 ° C (Grad Celsius) und intensives Durchmischen der beteiligten Gase.

3. Verfahren nach Anspruch 1 oder 2, dadurch gekennzeichnet, daß die Elektrodenrohlinge ( 4, 5 ) ungeschützt in der Brandstelle ( 1 ) dem Heißgas ausgesetzt werden.

4. Verfahren nach einem der vorhergehenden Ansprüche, dadurch gekennzeichnet, daß die Elektrodenrohlinge ( 4, 5 ) für den Brand aufgereiht durch ein gerades Brennrohr ( 1 ), das die Brennstelle und die in der Brennstelle befindlichen Elektrodenrohlinge umgibt, bewegt werden, daß ein jeweils letzter Elektrodenrohling ( 4 ) durch Eingriff ( 86 ) von außen vorgeschoben wird und andere Elektrodenrohlinge ( 5, 6 ) vor sich herschiebt, indem diese sich aufeinander abstützen, und daß zur Herstellung kreiszylinderförmiger Elektroden ( 4, 5 ) das Brennrohr ( 1 ) ein kreisrundes Rohr ist, in das die Elektrodenrohlinge koaxial zur Brennrohrachse ( 96 ) aneinandergereiht mit Zwischenraum passen.

5. Verfahren nach Anspruch 4, dadurch gekennzeichnet, daß ein Zwischenraum ( 9 ) gebildet wird, indem die Querschnittsfläche des Kanals des Brennrohres ( 1 ) um 30 bis 150% (Prozent), vorzugsweise um 40 bis 80% größer ist als die in der gleichen Querschnittsebene gemessene Querschnittsfläche eines im Brennrohr befindlichen Elektrodenrohlings ausmacht.

6. Verfahren nach einem der Ansprüche 4, 5, dadurch gekennzeichnet, daß die Heißgase an mehreren Stellen ( 10 - 14 ) auf die Länge des Brennrohres ( 1 ) verteilt, dosiert ( 15 - 19 ) in das Brennrohr eingeströmt werden und daß an mehreren Stellen (21, 22, 23) auf die Länge des Brennrohrs verteilt überschüssiges Heißgas zum Druckausgleich aus dem Brennrohr abgeströmt und mit dem übrigen Heißgas, das das Brennrohr ( 1 ) durchströmt hat, an die Verbrennungsstelle ( 27 ) geleitet wird.

7. Verfahren nach einem der vorhergehenden Ansprüche, dadurch gekennzeichnet, daß am förderabwärtigen Ende des Brennrohres der Kanal des Brennrohrs gegen Heißgasaustritt abgedichtet ist, indem der freie Zwischenraum ( 9 ) zwischen der Brennrohrwandung und einem Elektrodenrohling ( 89 ) ständig mit hitzebeständigem, rieselfähigem Schüttgut ( 88 ) einer Korngröße von 1 - 10 mm aufgefüllt gehalten wird, wobei Verluste, die durch auslaufendes Schüttgut am offenen Ende des Kanals entstehen, durch Nachfüllen von Schüttgut ständig ausgeglichen werden.

8. Verfahren nach einem der vorhergehenden Ansprüche, dadurch gekennzeichnet, daß die Elektroden während ihres Aufenthaltes im Brennrohr gerüttelt ( 44 ), um die Vorschubrichtung hin- und hergewälzt und/oder während des Vorschubs um die Vorschubrichtung gedreht werden.

9. Vorrichtung zum Herstellen von Elektroden, bei der das beladene, abgekühlte Heißgas an einer Verbrennungsstelle wieder aufgeheizt wird, indem von außen Heizenergie und Frischluft zugeführt und die Beladung verbrannt wird, und bei der das wieder aufgeheizte, von der Beladung befreite Heißgas erneut der Brandstelle zugeführt wird, dadurch gekennzeichnet, daß ein langgestrecktes, thermisch isoliertes Brennrohr ( 1 ) vorgesehen ist, daß am einen Ende des Brennrohrs eine Eintragsschleuse ( 2 ) und am anderen Ende des Brennrohrs eine Austragsschleuse ( 3 ) zum Ein- beziehungsweise Auschleusen einzelner Elektrodenrohlinge vorgesehen ist, daß auf die Länge des Brennrohrs verteilt in dieses mit einstellbaren Drosselventilen ( 15 bis 18 ) ausgestattete Heißgasstutzen ( 10 ) münden, die von einer gemeinsamen Heißgasleitung ( 20 ) ausgehen, daß vom Brennrohr auf die Länge desselben verteilt Abzugsstutzen ( 21 bis 24 ) ausgehen, die zu einer gemeinsamen Rezirkulationsleitung ( 25 ) führen, daß eine mit einem Brenner ( 28 ) ausgestattete Verbrennungskammer ( 27 ) vorgesehen ist, in die die Rezirkulationsleitung ( 25 ) und von der die Heißgasleitung ( 20 ) ausgeht, und
daß mindestens ein Gebläse ( 29 ) zur Aufrechterhaltung einer Kreislaufströmung des Heißgases von der Verbrennungskammer über die Heißgasleitung in das Brennrohr und über die Rezirkulationsleitung zurück zur Verbrennungskammer.

10. Vorrichtung nach Anspruch 9, dadurch gekennzeichnet, daß als Austragsschleuse ein in den Kanal ( 8 ) des Brennrohrs ( 1 ) von oben mündender Schacht ( 87 ) vorgesehen ist, der zum Einfüllen von rieselfähigem Schüttgut ( 88 ), vorzugsweise Sand, in den freien Zwischenraum ( 9 ) zwischen der Brennrohrwandung und einem Elektrodenrohling ( 89 ) geeignet ist.

FIG. 1

FIG.1A

FIG.1B

FIG. 2

FIG. 2A

FIG. 2B

P46 738-213

FIG. 5

FIG. 3

FIG.4

FIG. 6

FIG.7

P46 738-3/3